# EUROPÄISCHE PATENTSCHRIFT

(11) **EP 1 920 174 B1**
(45) Veröffentlichungstag und Bekanntmachung des Hinweises auf die Patenterteilung: **23.07.2014**
(21) Anmeldenummer: 06791733.6
(22) Anmeldetag: 30.08.2006
(51) Int. Cl.: F16J 1/16

(54) **VERLAUFENDE BOLZENBOHRUNGSGEOMETRIE FÜR EINEN KOLBEN EINER BRENNKRAFTMASCHINE**
PISTON-PIN BORE DIMENSIONS FOR A PISTON OF AN INTERNAL COMBUSTION ENGINE
GEOMETRIE D'ALESAGE D'AXE DE PISTON CONTINUE DESTINEE A UN PISTON D'UN MOTEUR A COMBUSTION INTERNE

(30) Priorität: 03.09.2005 DE 102005041907
(43) Veröffentlichungstag der Anmeldung: 14.05.2008
(73) Patentinhaber: KS Kolbenschmidt GmbH, 74172 Neckarsulm (DE)
(72) Erfinder: KAMP, Hartmut, 47072 Heilbronn (DE)
(74) Vertreter: Greif, Thomas
(86) Internationale Anmeldenummer: PCT/EP2006/008479
(87) Internationale Veröffentlichungsnummer: WO 2007/025733

(56) Entgegenhaltungen:
- DE-A1- 3 036 062
- DE-A1- 4 111 368
- DE-A1- 10 231 233
- FR-A- 2 157 319

## Beschreibung

Die Erfindung betrifft einen Kolben mit einem eine Bolzenbohrung aufweisenden Kolbenschaft gemäß den Merkmalen des Oberbegriffes des Patentanspruches 1.

Kolben mit Kolbenschäften für eine Brennkraftmaschine, wobei eine Bolzenbohrung in dem Kolbenschaft als Formbohrung eingebracht wird, sind grundsätzlich bekannt. Aufgrund der Belastungen der Bolzenbohrungsinnenflächen, in denen sich der Bolzen, der den Kolben mit dem Pleuel verbindet, befindet, ist beim Betrieb extrem hohen Belastungen aufgrund von Verformungen des Bolzens bei der Bewegung des Kolbens ausgesetzt. Zur Kompensation der Verformung der Bolzenbohrung (Nabenbohrung) ist es im Stand der Technik (zum Beispiel DE 21 52 462 A1, DE 30 36 062 C2, DE 41 41 279 C2, DE 44 41 450 A1 oder DE 102 31 233 A1) bekannt, entlang der Mantellinie der Bolzenbohrung segment - bzw. abschnittsweise diese Nabenbohrung oval, kreisförmig oder zylindrisch auszulegen. Daraus resultieren aber beim Übergang von dem einem Abschnitt mit der einen Form auf den anderen Abschnitt mit einer anderen Form Übergänge, die eine Stufe bilden, die in nachteiliger Weise zu einer zusätzlichen Belastung der Nabenbohrung und des darin angeordneten Bolzens führen.

So ist es aus der Offenlegungsschrift DE 21 52 462 oder der Patentschrift DE 27 56 878 C2 bekannt, dass die Bolzenbohrung in Richtung des Innenbereiches des Kolbens einen sich bezogen auf die Bolzenachse gleichmäßig aufweitenden (in etwa trompetenförmigen) Verlauf hat. Bei der Patentschrift DE 30 36 062 C2 ist lediglich oberhalb der Bohrungsachse eine Aufweitung vorhanden. Mit diesen sich aufweitenden Verläufen der Bolzenbohrung in axialer Richtung des Innenbereiches des Kolbens wird zwar schon eine bessere Auflage des Bolzens auf der Oberfläche der Bolzenbohrung erzielt, wenn sich der Bolzen im Betrieb des Kolbens verformt, allerdings ist auf Grund der Anforderungen an moderne Brennkraftmaschinen hinsichtlich der einzuhaltenden Verbräuche und Abgasemissionen, woraus im Betrieb des Kolbens in der Brennkraftmaschine entsprechende Verbrennungstemperaturen und Verbrennungsdrücke resultieren, die gesamte Belastung des Systems aus Bolzenbohrung und Kolbenbolzen immer noch sehr hoch und die Abstützung des Kolbenbolzens in der Bolzenbohrung nicht optimal.

Der Erfindung liegt daher die Aufgabe zugrunde, eine als Formbohrung ausgebildete Bolzenbohrung eines Kolbens bereitzustellen, die die eingangs geschilderten Nachteile vermeidet, dass heißt, mit der eine höhere Belastung des gesamten Kolbens erzielbar ist und eine zusätzliche bzw. die gesamte Belastung des Systems Nabenbohrung/Bolzen reduziert wird.

Diese Aufgabe ist durch die Merkmale des Patentanspruches 1 gelöst.

Erfindungsgemäß ist vorgesehen, dass die Aufweitung der Bolzenbohrung in axialer Richtung in Richtung des Kolbeninnenbereiches, oberhalb einer Bohrungsachse der Bolzenbohrung, bezogen auf eine Kolbenhubachse, kleiner ist als die Aufweitung unterhalb der Bohrungsachse (oder umgekehrt). Damit wird der Umstand ausgenutzt, dass aufgrund der Geometrie der Bolzenbohrung die Auflageflächen des Kolbenbolzens in der Bolzenbohrung, insbesondere in Richtung der Kolbenhubachse bei der Auf- und Abbewegung des Kolbens im Zylinder der Brennkraftmaschine, den Verformungen des Kolbenbolzens angepasst sind. Darüber hinaus berücksichtigt diese spezielle Aufweitung der Bolzenbohrung nicht nur die Verformung des Kolbenbolzens, sondern auch die Verformung des Kolbens selber während des Betriebes in der Brennkraftmaschine, was bisher im Stand der Technik unberücksichtigt blieb. Auf Grund dieser Verformungen sowohl des Kolbens als auch des Kolbenbolzens im Betrieb, die oberhalb und unterhalb der Bolzenachse unterschiedlich sind, ermöglicht es die Erfindung jetzt, diese Belastungen des Kolbenbolzens gleichmäßig auf die Auflageflächen auf die Bolzenbohrung (insbesondere in dessen Zenit und in den Bereichen darum herum, bezogen auf die Kolbenhubachse) zu verteilen und somit die gesamte Belastung des Systems aus Bolzenbohrung und Bolzen zu reduzieren. Damit ist insgesamt eine höhere Belastung des Kolbens erzielbar, da mit der Erfindung die Verformung des Kolbenbolzens im Belastungsfall an die Verformung des Kolbens selber (bzw. dessen Bolzenbohrung) angepasst ist.

In einer weiteren Ausgestaltung der Erfindung sind die Mantellinien, der Bolzenbohrung rund oder oval. Durch diese Freiheiten in der Bohrungsgeometrie über die axiale Erstreckung kann eine weitere Anpassung an die Verformung von Kolben und Kolbenbolzen im Belastungsfall erfolgen.

In Weiterbildung der Erfindung ist vorgesehen, dass auch die Aufweitung oberhalb der Bohrungsachse, jetzt aber in Richtung des Kolbenäußeren bezogen auf die Kolbenhubachse, kleiner ist als die Aufweitung in die gleiche Richtung unterhalb der Bolzenachse oder umgekehrt. Obwohl bei der Verformung die größten Flächenpressungen in dem im Kolbeninneren bereich zugewandten Teil der Bolzenbohrung stattfindet, kann für den weiteren Abfang der wirkenden Kräfte die Bolzenbohrung auch in Richtung des Kolbenäußeren die Erfindungsgemäße Aufweitung aufweisen, die bezogen auf die Bolzenachse asymmetrisch ist.

In einer weiteren Ausgestaltung der Erfindung ist die Kolbennabe als eine trapezförmige Nabe ausgebildet. Auch für diese Bauform der trapezförmigen Nabe gilt, dass die Aufweitung oberhalb der Bohrungsachse bezogen auf die Kolbenhubachse, kleiner ist als die Aufweitung unterhalb der Bolzenachse oder umgekehrt. Das bedeutet, dass die Erfindung nicht auf eine bestimmte Bauform der Kolbennabe beschränkt ist.

In Weiterbildung der Erfindung ist vorgesehen, dass der Übergang von einem Abschnitt mit einer ersten Formgebung zum nächsten Abschnitt mit einer anderen Formgebung verlaufend ausgebildet ist. Damit erreicht die Erfindung in vorteilhafter Weise, dass die bisher bekannte abschnittsweise Formgebung der Bolzenbohrung aufgelöst wird, in dem bei der Bearbeitung verlaufende Übergänge zum Beispiel von kreisförmigen zu zylindrischen, von kreisförmigen zu ovalen, von zylindrischen zu ovalen, von ovalen zu kreisförmigen, von ovalen mit einem ersten Radius zu einer ovalen Formgebung mit einem anderen Radius und dergleichen geschaffen wird. Hier sei darauf hingewiesen, dass die gerade erfolgte Aufzählung nur beispielhaft und nicht beschränkend ist. Weiterhin weisen in vorteilhafter Weise die in die jeweilige Geometrie über den Bohrungsumfang übergehende Form unterschiedliche Radien aus, so dass die Längsachsen der jeweiligen Abschnitte mit ihrer bestimmten Formgebung sowohl senkrecht als auch parallel zur Kolbenachse mit über den Umfang unterschiedlicher Ausdehnung ausgelegt werden. So weisen zum Beispiel die in die ovale Geometrie über den Bohrungsumfang übergehende Form unterschiedliche Radien aus, so dass die Längsachsen der einzelnen Ovalitäten sowohl senkrecht als auch parallel zur Kolbenachse (= Kolbenhubachse) mit über den Umfang unterschiedlicher Ausdehnung ausgelegt werden. Diese konstruktiven und bearbeitungsmäßigen Freiheiten in der abschnittsweisen Geometrie und damit der gesamten Geometrie über die axiale Erstreckung der Bolzenbohrung (= Bohrungslänge) sowie deren Mantelflächen erlauben damit erst eine genaue, exakte Anpassung an die Verformung der Bolzenbohrung bzw. des Bolzens während des Betriebes des Kolbens im Brennraum der Brennkraftmaschine.

Eine besondere Ausgestaltung der Erfindung sieht dabei vor, dass ausgehend vom Zenit der Bolzenbohrung in Richtung des einem Verbrennungsraum der Brennkraftmaschine zugewandten Bereiches des Kolbens die Mantellinie mit über die axiale Erstreckung und des Umfanges der Bolzenbohrung elliptisch mit sich verändernden Radien ausgebildet sind. So kann beispielsweise die Form (Geometrie) der Bolzenbohrung eine ovale, kreisrunde (zylindrische) und wieder ovale Geometrie stufenlos mit frei gewählter Ausrichtung und Länge der Ovalitätsachsen aufweisen. Die Wahl der Ausrichtung und Länge der Ovalitätsachsen richtet sich dabei nach den Geometrien des Kolbens, insbesondere der axialen Erstreckung und des Durchmessers des Bolzens sowie insbesondere nach dem Durchmesser und der Kolbenhöhe des Kolbens.

Insgesamt bietet die Erfindung eine optimierte, d.h. den Verformungskräften angepasste Formgebung der Bolzenbohrung zur Minimierung der Reibung in der Bolzennabe bei gleichzeitiger Sicherstellung der Schmierung des Kolbenbolzens über die gesamte Mantelfläche. Hier ist besonders von Bedeutung, dass die Erfindung eine Schmierung des Kolbenbodens über die gesamte Mantelfläche ermöglicht, was bei den bisherigen Ausführungsformen gemäß dem Stand der Technik nicht möglich war. Außerdem führt die erfindungsgemäße Ausgestaltung der Geometrie der Bolzenbohrung zu einer Verringerung der Bruchgefahr von Kolben bzw. Kolbenbolzen, einer Gewichtserleichterung unter Beibehaltung der Festigkeit sowie einer weiteren Reduzierung von Reibungskräften.

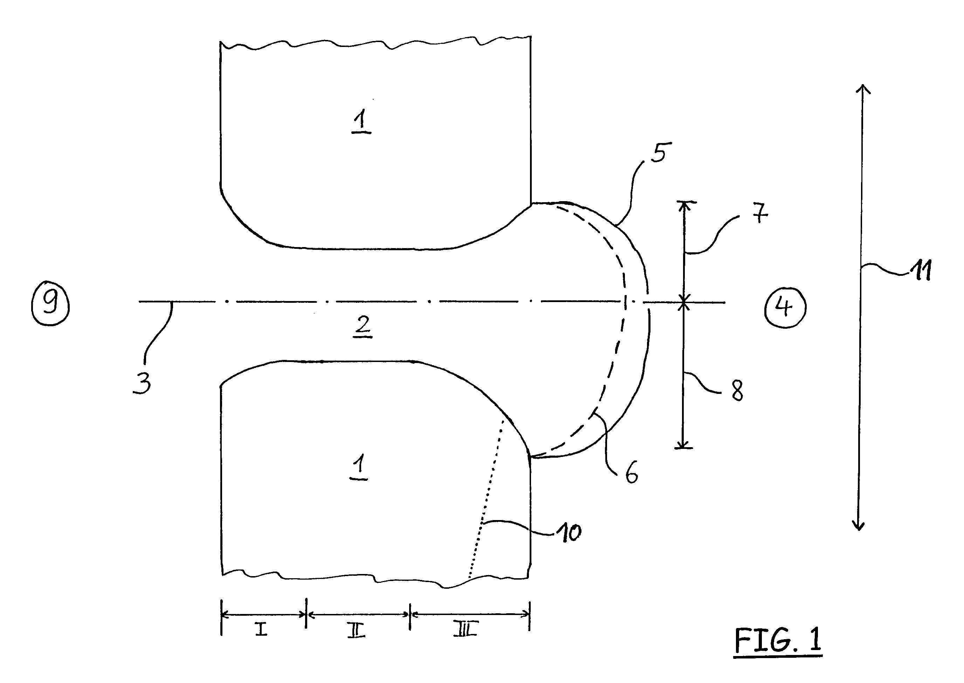

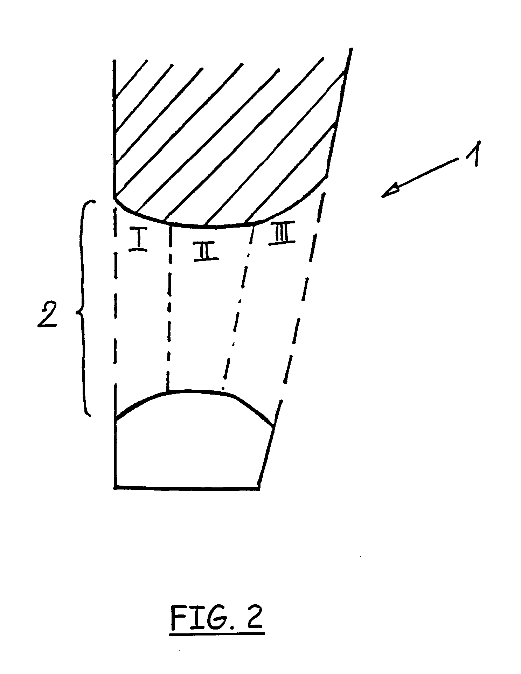

Ausführungsbeispiele der Erfindung, auf die diese jedoch nicht beschränkt ist, sind im folgenden beschrieben und anhand der Figuren 1 und 2 erläutert.

In Figur 1 ist ausschnittsweise ein Kolben einer Brennkraftmaschine gezeigt, wobei dieser ein- oder mehrteilige Kolben in an sich bekannter Weise eine schematisch dargestellte Kolbennabe 1 aufweist.

In der Kolbennabe 1 ist eine Bolzenbohrung 2 eingebracht, die eine Bohrungsachse 3 aufweist. Ein Kolbeninnenbereich ist mit 4 bezeichnet, so dass sich eine nicht weiter dargestellte Kolbennabe bei Betrachtung der Figur 1 rechts befindet auf Grund der symmetrischen Anordnung der Kolbennaben unterhalb eines Kolbenbodens des Kolbens. In der Figur 1 ist sehr gut zu erkennen, dass die Bolzenbohrung 2 in Richtung des Kolbeninnenbereiches 4 sich aufweitet und einen insbesondere trompetenförmigen Verlauf aufweist. Die Mantellinien 5 oder 6 der sich aufweitenden Bolzenbohrung 2 können unterschiedliche Dimensionen aufweisen und sind je nach Kolbengeometrie rund oder oval mit sich im axialen Verlauf (in Richtung des Kolbeninnenbereiches 4 und/oder Kolbenaußenbereiches 9) verändernden Durchmesser bzw. sich ändernden kleinen und großen Halbachsen des Ovals. Für die Erfindung ist es wichtig, dass eine obere Achse 7, bezogen auf die Bohrungsachse 3, kleiner ist als die untere Achse 8 unterhalb der Bohrungsachse 3 (oder auch umgekehrt). Gleiches gilt auch für den Verlauf der Bolzenbohrung in Richtung des Kolbenaußenbereiches 9, wobei in diesem Fall die Aufweitung oberhalb der Bohrungsachse 3 größer ist als die Aufweitung der Bolzenbohrung 2 unterhalb der Bohrungsachse 3. Durch diese unterschiedlichen sich aufweitenden Verläufe der Bolzenbohrung, einmal in Richtung des Kolbeninnenbereiches 4 und/oder einmal in Richtung des Kolbenaußenbereiches 9, wird es ermöglicht, dass der nicht dargestellte Kolbenbolzen sowohl unter Berücksichtigung seiner eigenen Verformung als auch unter Berücksichtigung der Verformung des Kolbens in Bereichen der Kolbennabe 1 im Betrieb der Brennkraftmaschine optimal in der Bolzenbohrung 2, insbesondere in Richtung des Kolbeninnenbereiches 4, abgestützt wird. Diese Abstützung findet insbesondere in den Bereichen des Zenites der Bolzenbohrung 2 und darum herum bezogen auf die Kolbenhubachse 11 statt. In Figur 1 ist punktiert noch eine Innenwand 10 in der Kolbennabe 1 angedeutet, womit verdeutlicht wird, dass sich die Erfindung auch auf eine trapezförmige Kolbennabe genauso anwenden lässt wie auf andere Formen der Kolbennabe 1, wie zum Beispiel gestufte Kolbennaben.

Die Figur 2 zeigt schematisch im Schnitt die Kolbennabe 1 des Kolbens, der als ein- oder mehrteiliger Kolben ausgebildet ist. Ist der Kolben ein mehrteiliger Kolben, so kann er zunächst aus zwei oder mehr Teilen bestehen, die zusammengefügt werden und dann einen fertigen einteiligen Kolben bilden, der einen Kolbenschaft aufweist. Unter dem Begriff "mehrteilige Kolben" sind aber auch solche Kolben zu verstehen, die Pendelschaftkolben genannt werden, bei denen ein Kolbenoberteil mit einem Kolbenunterteil (= Schaftteil) über einen Bolzen verbunden werden.

Die Kolbennabe 1 des Kolbens weist eine beliebige Geometrie auf, die dem Einsatz des Kolbens in der Brennkraftmaschine angepasst ist. So kann die Kolbennabe 1, in dem sich die Bolzenbohrung zur Aufnahme des Kolbenbolzens befindet, sich bis an die äußere Oberfläche (Lauffläche) des Kolbens erstrecken oder zurückgesetzt sein (sogenanntes Kastendesign).

Bei dem Ausführungsbeispiel der Figur 2 ist der Verlauf der Bolzenbohrung in axialer Richtung in drei Abschnitte I, II und III unterteilt, wobei auch mehr oder weniger als drei Abschnitte vorhanden sein können. Diese drei Abschnitte I bis III weisen die in Figur 1 gezeigten und hier schon beschriebenen erforderlichen Geometrien auf, die insbesondere oval, kreisrund, zylindrisch oder dergleichen geformt sind. Hierbei ist wichtig, dass der Übergang von einem Abschnitt I mit einer ersten Formgebung zum nächsten Abschnitt II mit einer anderen Formgebung verlaufend ausgebildet ist. Gleiches gilt für den Übergang vom Abschnitt II zum Abschnitt III. Der Begriff "Formgebung" ist dabei so zu verstehen, dass zum Beispiel sich zwei anschließende Abschnitte die gleiche geometrische Form, zum Beispiel oval, aufweisen können, aber unterschiedliche Radien der jeweiligen Ovalität aufweisen. Ergänzend ist unter dem Begriff "Formgebung" aber auch zu verstehen, dass ein Abschnitt zum Beispiel oval und der sich anschließende Abschnitt kreisförmig ausgebildet ist. Hier kommen also alle Geometrien und Abmessungen in Betracht, die für den Einsatz des Kolbenbolzens in der Bolzenbohrung unter Berücksichtigung deren Geometrien und Belastungen möglich sind.

### Bezugszeichenliste

- 1.: Kolbennabe
- 2.: Bolzenbohrung
- 3.: Bohrungsachse
- 4.: Kolbeninnenbereich
- 5.: erste Mantellinie
- 6.: weitere Mantellinie
- 7.: obere Achse
- 8.: untere Achse
- 9.: Kolbenaußenbereich
- 10.: Innenwand
- 11.: Kolbenhubachse

## Patentansprüche

1. Kolben mit einer Kolbennabe (1) in der eine Bolzenbohrung (2) zur Aufnahme eines Kolbenbolzens angeordnet ist, wobei die Bolzenbohrung (2) in Richtung eines Kolbeninnenbereiches (4) einen sich aufweitenden Verlauf aufweist, wobei eine Aufweitung oberhalb einer Bohrungsachse (3), bezogen auf eine Kolbenhubachse (11) kleiner ist als eine Aufweitung unterhalb der Bohrungsachse (3), oder umgekehrt, **dadurch gekennzeichnet, dass** in Richtung eines Kolbenaußenbereiches (9) die Aufweitung oberhalb der Bohrungsachse (3) bezogen auf die Kolbenhubachse (11), kleiner ist als die Aufweitung unterhalb der Bohrungsachse (3) oder umgekehrt.

2. Kolben nach Anspruch 1, **dadurch gekennzeichnet, dass** die Aufweitung in Richtung des Kolbeninnenbereiches (4) und/oder in Richtung des Kolbenaußenbereiches (9) trompetenförmig ausgebildet ist.

3. Kolben nach einem der Ansprüche 1 oder 2, **dadurch gekennzeichnet, dass** die Mantellinien (5, 6) der Bolzenbohrung (2) rund oder oval sind.

4. Kolben nach einem der vorhergehenden Ansprüche, **dadurch gekennzeichnet, dass** die Kolbennabe (1) im Querschnitt als eine trapezförmige oder stufenförmige Nabe ausgebildet ist.

5. Kolben nach einem der vorhergehenden Ansprüche, **dadurch gekennzeichnet, dass** der Übergang von einem Abschnitt mit einer ersten Formgebung zu einem nächsten Abschnitt mit einer anderen Formgebung verlaufend ausgebildet ist.

6. Kolben nach Anspruch 5, **dadurch gekennzeichnet, dass** ein erster Abschnitt (I) kreisförmig, ein zweiter Abschnitt (II) zylinderförmig und ein dritter Abschnitt (III) oval ausgebildet ist.

7. Kolben nach Anspruch 5 oder 6, **dadurch gekennzeichnet, dass** zumindest drei Abschnitte (I), (II), (III) oval ausgebildet sind und voneinander unterschiedliche Radien der Ovalität aufweisen.

8. Kolben nach einem der Ansprüche 5 bis 7, **dadurch gekennzeichnet, dass** der erste Abschnitt (I) eine kreisförmige Fläche im Querschnitt aufweist, der zweite Abschnitt (II) als zylinderförmiger Körper und der dritte Abschnitt (III) oval in seiner flächenförmigen Erstreckung ausgebildet ist.

9. Kolben nach einem der Ansprüche 5 bis 8, **dadurch gekennzeichnet, dass** ausgehend vom Zenit der Bolzenbohrung (2) in Richtung des einem Verbrennungsraum zugewandten Bereiches des Kolbens die Mantellinien mit über die axiale Erstreckung und des Umfanges der Bolzenbohrung (2) elliptisch sich verändernden Radien ausgebildet sind.

## Claims

1. Piston having a piston boss (1), in which a pin bore (2) for receiving a piston pin is arranged, the pin bore (2) having a widening profile in the direction of a piston inner region (4), a widening above a bore axis (3), in relation to a piston stroke axis (11), being smaller than the widening below the bore axis (3), or vice versa, **characterized in that**, in the direction of a piston outer region (9), the widening above the bore axis (3), in relation to the piston stroke axis (11), is smaller than the widening below the bore axis (3), or vice versa.

2. Piston according to Claim 1, **characterized in that** the widening in the direction of the piston inner region (4) and/or in the direction of the piston outer region (9) is of trumpet-shaped configuration.

3. Piston according to either of Claims 1 and 2, **characterized in that** the surface lines (5, 6) of the pin bore (2) are round or oval.

4. Piston according to one of the preceding claims, **characterized in that** the piston boss (1) in cross section is configured as a trapezoidal or stepped boss.

5. Piston according to one of the preceding claims, **characterized in that** the transition is configured so as to run from a section with a first shape to a next section with a different shape.

6. Piston according to Claim 5, **characterized in that** a first section (I) is of circular configuration, a second section (II) is of cylindrical configuration and a third section (III) is of oval configuration.

7. Piston according to Claim 5 or 6, **characterized in that** at least three sections (I), (II), (III) are of oval configuration and have different radii of the ovality from one another.

8. Piston according to Claims 5 to 7, **characterized in that** the first section (I) is of circular configuration in cross section, the second section (II) is of cylindrical body and the third section (III) is of oval configuration in a laminar extension.

9. Piston according to one of Claims 5 to 7, **characterized in that**, starting from the zenith of the pin bore (2), the surface line are configured, in the direction of the region of the piston which faces a combustion chamber, elliptically over the axial extent and the circumference of the pin bore (2) with radii which change.

## Revendications

1. Piston comprenant un moyeu de piston (1) dans lequel est disposé un alésage de boulon (2) pour recevoir un boulon de piston, l'alésage de boulon (2) présentant une allure s'élargissant dans la direction d'une région intérieure du piston (4), un élargissement, au-dessus d'un axe d'alésage (3), par rapport à un axe de levée du piston (11), étant inférieur à un élargissement en dessous de l'axe de l'alésage (3), ou inversement, **caractérisé en ce que** dans la direction d'une région extérieure du piston (9), l'élargissement au-dessus de l'axe de l'alésage (3), par rapport à l'axe de levée du piston (11), est inférieur à l'élargissement en dessous de l'axe de l'alésage (3) ou inversement.

2. Piston selon la revendication 1, **caractérisé en ce que** l'élargissement est réalisé en forme de trompette dans la direction de la région intérieure du piston (4) et/ou dans la direction de la région extérieure du piston (9).

3. Piston selon l'une quelconque des revendications 1 ou 2, **caractérisé en ce que** les lignes d'enveloppe (5, 6) de l'alésage de piston (2) sont rondes ou ovales.

4. Piston selon l'une quelconque des revendications précédentes, **caractérisé en ce que** le moyeu de piston (1) en section diagonale est réalisé sous forme de moyeu trapézoïdal ou de forme étagée.

5. Piston selon l'une quelconque des revendications précédentes, **caractérisé en ce que** la transition est réalisée de manière à s'étendre d'une portion ayant une première forme à une portion suivante ayant une autre forme.

6. Piston selon la revendication 5, **caractérisé en ce qu'**une première portion (I) est réalisée sous forme circulaire, une deuxième portion (II) est réalisée sous forme cylindrique et une troisième portion (III) est réalisée sous forme ovale.

7. Piston selon la revendication 5 ou 6, **caractérisé en ce qu'**au moins trois portions (I), (II), (III) sont réalisées sous forme ovale et présentent des rayons d'ovalité différents les uns par rapport aux autres.

8. Piston selon l'une quelconque des revendications 5 à 7, caractérisé en cette première portion (I) est réalisée sous forme circulaire en section diagonale, la deuxième prtion (II) est réalisée sous forme cylindrique et la troisième portion (III) est réalisée sous forme ovale dans l'extension en forme surface.

9. Piston selon l'une quelconque des revendications 5 à 7, **caractérisé en ce qu'**à partir du zénith de l'alésage de boulon (2) dans la direction de la région du piston tournée vers un espace de chambre de combustion, les lignes d'enveloppe sont réalisées sur l'étendue axiale et sur la périphérie de l'alésage de boulon (2) de manière elliptique avec des rayons qui varient.
